(19) **Europäisches Patentamt / European Patent Office / Office européen des brevets**

(11) **EP 2 292 315 B1**

(12) **FASCICULE DE BREVET EUROPEEN**

(45) Date de publication et mention de la délivrance du brevet:
**09.05.2012 Bulletin 2012/19**

(51) Int Cl.:
*B01D 53/83* (2006.01)   *B01D 53/50* (2006.01)
*B01D 53/34* (2006.01)   *B01D 53/40* (2006.01)
*B01D 53/44* (2006.01)

(21) Numéro de dépôt: **10171844.3**

(22) Date de dépôt: **04.08.2010**

(54) **Procédé et installation d'épuration de fumées de combustion**

Verfahren und Vorrichtung zur Reinigung von Verbrennungsabgasen

Method and device for the purification of combustion flue gases

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **05.08.2009 FR 0955511**

(43) Date de publication de la demande:
**09.03.2011 Bulletin 2011/10**

(73) Titulaire: **LAB SA**
**69006 Lyon (FR)**

(72) Inventeurs:
• **Siret, Bernard**
**69200, VENISSIEUX (FR)**

• **Tabaries, Franck**
**83190, OLLIOULES (FR)**

(74) Mandataire: **Grand, Guillaume et al**
**Cabinet Lavoix**
**62, rue de Bonnel**
**68448 Lyon Cedex 03 (FR)**

(56) Documents cités:
**EP-A1- 0 646 404      EP-A1- 1 537 905**
**EP-A1- 1 875 953      EP-A1- 1 955 758**
**EP-A2- 0 104 335      US-A- 4 889 698**

## Description

La présente invention concerne un procédé et une installation d'épuration de fumées de combustion.

L'élimination des ordures ménagères peut se faire par plusieurs voies. On connaît tout d'abord le recyclage, lequel permet une revalorisation directe. La mise en décharge est aussi une option qui est utilisée de façon courante. Cependant, ce mode de gestion, qui n'offre ni recyclage ni valorisation de quelque forme que ce soit, n'est pas pleinement satisfaisant.

L'incinération occupe actuellement une place de choix dans le traitement des déchets, car elle offre une valorisation énergétique des ordures, et permet en même temps une très forte réduction du volume des déchets. Pour ces raisons, de nombreux incinérateurs sont construits et en opération. On notera, pour mémoire, que d'autres modes d'élimination des déchets sont également possibles.

Dans le cas de l'incinération, également appelée valorisation énergétique des résidus, le processus de combustion génère des fumées qui doivent être traitées. En effet, elles contiennent notamment des poussières fines, des composés acides comme l'acide chlorhydrique et le dioxyde de soufre, des métaux lourds, des oxydes d'azote et des composés organiques. Pour cette raison, tous les incinérateurs sont équipés de systèmes de traitement de fumées, pour lesquels différents schémas sont possibles : par voie sèche, semi-sèche ou humide pour ce qui est des polluants acides, par injection de charbon actif ou par catalyseur pour ce qui est des polluants organiques, par exemple.

Lors des phases d'arrêt et de démarrage, le profil de température des fumées est très différent du profil de température en marche normale. Pendant ces périodes, on génère des quantités de composés organiques, en particulier des dioxines et furanes, très supérieures à celles générées en marche régulière.

Une solution possible à cette situation, dite transitoire, consiste à surdoser le réactif d'adsorption. Il s'agit cependant d'une gestion « en aveugle », de sorte que cette solution n'est pas pleinement satisfaisante. Il faut noter en outre que cette situation transitoire ne prévaut pas uniquement lors des démarrages et des arrêts, mais également à d'autres périodes, par exemple lorsque la qualité du produit incinéré varie brusquement, notamment lors d'un changement de fuel dans des brûleurs.

Il faut aussi noter que ces périodes transitoires n'affectent pas uniquement les composés organiques, tels que les dioxines, mais potentiellement tous les polluants. Lors de ces transitoires, la teneur dans les fumées de polluants comme HCl et SO$_2$ peut aussi beaucoup varier. Ces variations perturbent le fonctionnement du traitement des fumées en aval.

EP-A-0 646 404 propose d'épurer des fumées de combustion, en y introduisant un produit pulvérulent qui capte l'acide chlorhydrique et le dioxyde de souffre. Le débit de produit est piloté par un calculateur dédié, en fonction des concentrations en ces polluants acides, mesurées en amont d'un séparateur de particules approprié. Ce document ne s'intéresse pas au traitement des composés organiques présents dans ces fumées.

De son côté, US-A-4 889 698 divulgue un traitement, par voie semi-sèche, des polluants acides présents dans des fumées, combiné à l'introduction d'un produit pulvérulent carboné dans les fumées non encore traitées pour contrôler les composés organiques présents dans ces fumées.
En pratique, la quantité introduite du produit carboné est constante ou bien liée à la teneur en composés organiques dans les fumées à traiter, sans autre précision, en particulier sans corrélation avec les polluants acides à capter par voie semi-sèche.

EP-A-1 537 907 propose, quant à lui, de traiter des fumées de combustion, par l'introduction de produits pulvérulents à la fois en amont et en aval d'un réacteur. Ce document envisage, en tant que produits pulvérulents, un mélange de chaux et de coke, qui va agir à la fois sur les polluants acides et sur les composés organiques, étant remarqué qu'aucune précision n'est fournie sur la façon de doser les quantités respectives de chaux et de coke.

On notera qu'aucun de ces trois documents ne s'intéresse aux phases transitoires du fonctionnement des unités d'où proviennent les fumées à traiter.

Le but de la présente invention est d'optimiser le dosage de produits de neutralisation des polluants acides et des composés organiques présents dans des fumées de combustion, en vue d'améliorer de façon économique l'efficacité de ces produits, notamment lors de phases transitoires affectant brutalement la composition des fumées à traiter.

A cet effet, elle a pour objet un procédé d'épuration de fumées de combustion, tel que défini à la revendication 1.

D'autres caractéristiques de l'invention sont spécifiées aux revendications 2 à 8.

L'invention a également pour objet une installation d'épuration de combustion, telle que définie à la revendication 9.

L'invention va être décrite ci-après, en référence aux dessins annexés, donnés uniquement à titre d'exemple non limitatif, dans lesquels :

- la figure 1 est une vue schématique, illustrant une installation de combustion conforme à l'invention ; et
- la figure 2 est un graphe, illustrant le résultat d'une phase de mesures préalables opérée selon l'invention.

La présente invention vise à contrôler de manière globale les émissions de polluants lors des phases transitoires et, en particulier, mais pas de manière exclusive, lors des arrêts et des démarrages d'unités de combustion. Elle s'applique, en particulier, aux installations de combustion de déchets.

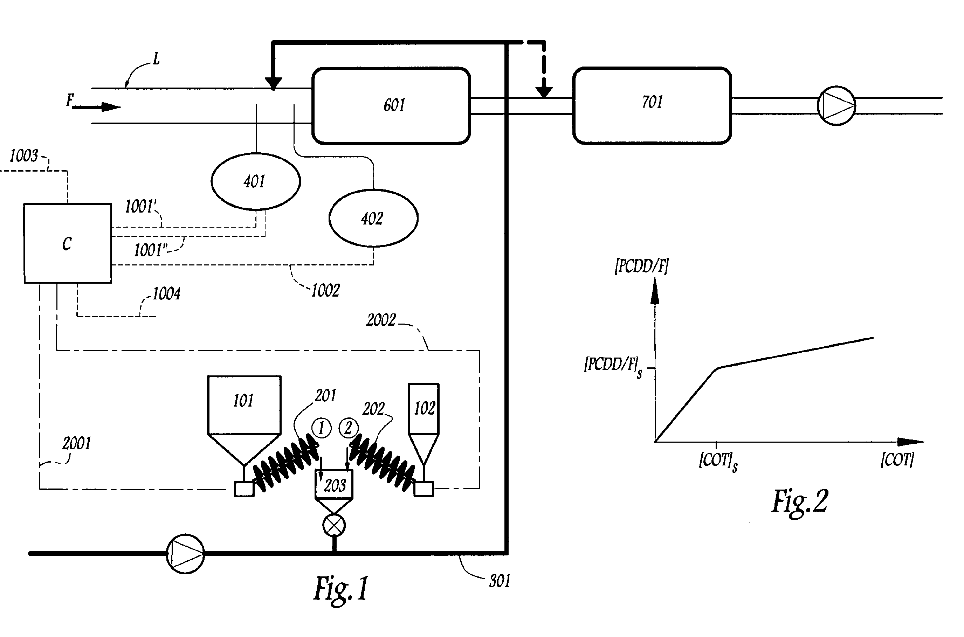

En référence à la figure 1, une ligne L véhicule des fumées F provenant d'un incinérateur, non représenté. Ces fumées sont alors traitées dans un système d'épuration, lequel comprend dans l'exemple illustré un réacteur 601 et un filtre à manche 701. Cependant, d'autres technologies équivalentes peuvent être utilisées.

Ainsi, on peut utiliser en tant que réacteur, soit un tel réacteur destiné à donner un temps de contact suffisant entre les réactifs et les fumées, soit une tour d'atomisation. De plus, le filtre à manche peut être remplacé par tout autre dispositif de collection de particules, tel qu'un électrofiltre.

On retrouve également deux ensembles, dont chacun est destiné à doser un produit correspondant. Chaque ensemble comprend tout d'abord un silo de stockage respectif 101, 102, associé à un élément de dosage, de type vis sans fin 201 ou 202. Cependant, à titre de variante, on peut prévoir d'utiliser un autre type de dispositif de stockage, tel un « big bag », ainsi qu'un autre type d'élément de dosage, tel que par exemple une vis rotative.

Le premier silo de stockage 101 renferme un produit pulvérulent 1 apte à réagir avec les polluants acides. Il s'agit par exemple de chaux, de bicarbonate de sodium ou encore de magnésie. Par ailleurs, le second silo de stockage 102 renferme un produit pulvérulent 2 propre à capter les composés organiques, notamment les dioxines, présents dans les fumées. Un tel produit peut être un produit minéral, par exemple du type argile ou zéolite, un produit carboné tel que du charbon actif, ou du coke en poudre, ou bien un mélange de ces produits. Il est également possible d'utiliser ces produits dilués dans un ballast minéral, par exemple du type chaux, du moment que la concentration en produit actif minéral ou carboné excède 25% en poids.

On notera que ces deux produits 1 et 2 sont stockés dans des silos séparés, de sorte qu'ils peuvent être dosés de façon indépendante.

Chaque vis sans fin 201 et 202 débouche dans un bac 203, lequel est mis en communication avec une ligne d'alimentation 301. Cette dernière débouche dans les fumées provenant de l'incinérateur, à la fois en amont du réacteur 601 et du filtre à manche 701. Cependant, à titre de variante, on peut prévoir que cette ligne 303 débouche, au moins pour partie, en amont du filtre, mais cependant en aval du réacteur (voir flèche en pointillés). A titre de variante supplémentaire, également non représentée, deux vis sans fin peuvent être associées à deux lignes d'alimentation, lesquelles sont indépendantes et débouchent dans la ligne de collecte des fumées.

Deux analyseurs 401 et 402 sont piqués sur la ligne L véhiculant les fumées, provenant de l'incinérateur. Il est important de noter que ces dispositifs permettent d'analyser les fumées en amont du dispositif d'épuration.

Le premier analyseur de fumées 401 délivre des informations relatives à la teneur en différents polluants, dont l'acide chlorhydrique HCl et le dioxyde de soufre $SO_2$. Par ailleurs, le second analyseur 402 délivre des informations relatives à la teneur en composés organiques, désignés sous l'appellation COT. Il peut s'agir de la teneur en composés organiques volatils, ou bien en composés organiques totaux. A titre de variante, on peut prévoir d'utiliser un unique analyseur, lequel permet d'accéder aux différentes teneurs décrites ci-dessus.

Les signaux délivrés par ces analyseurs 401 et 402 sont dirigés, via des lignes 1001', 1001" et 1002, vers un calculateur C, dont la structure est connue en soi. Il peut s'agir d'un automate programmable, d'un système de supervision ou d'un microprocesseur. Les lignes d'entrée 1001' et 1001" fournissent des informations relatives aux teneurs respectives en HCl et $SO_2$, alors que celle 1002 fournit des informations relatives aux composés organiques.

En entrée, ce calculateur C peut également recevoir d'autres signaux, matérialisés par les lignes 1003 et 1004. En particulier, ces signaux peuvent être des informations relatives à la teneur en monoxyde de carbone CO : en effet, le monoxyde de carbone se révèle un « traceur » d'une mauvaise combustion à l'origine des fumées F, dans le sens où une forte teneur en celui-ci dans les fumées est révélatrice de circonstances de fonctionnement pour l'incinérateur précité, qui s'écartent de la marche normale de cet incinérateur. La présence anormalement importante de monoxyde de carbone est ainsi généralement constatée lors des phases transitoires évoquées plus haut. Plus précisément, une teneur élevée en monoxyde de carbone accroît la probabilité d'avoir une forte teneur en dioxines.

Un autre exemple pour les signaux des lignes 1003 et 1004 concerne une information relative au débit de fumées circulant dans la ligne 1.

Outre le fait que ces deux signaux 1003 et 1004 sont optionnels, on peut noter qu'il est possible de faire appel à d'autres types de signaux, alimentant le calculateur C par des lignes supplémentaires non représentées.

Le calculateur C est pourvu de deux sorties, à partir desquelles s'étendent des lignes de commande 2001 et 2002, en direction des vis sans fin 201 et 202. Dans ces conditions, en fonction des informations générées par ces deux lignes de sortie 2001 et 2002, les vitesses de rotation des deux vis 201 et 202 peuvent être commandées de façon indépendante. Par conséquent, ceci permet de modifier les quantités de produits respectifs, contenus dans les silos 101 et 102, qui sont alimentées en amont du filtre 701.

La mise en oeuvre de l'installation conforme à l'invention, décrite ci-dessus, va maintenant être explicitée dans ce qui suit.

Durant la marche de l'installation, les fumées issues de l'incinérateur circulent en continu dans la ligne 1. Les analyseurs 401 et 402 mesurent alors les teneurs respectives en composés acides, en particulier HCl et $SO_2$, ainsi qu'en composés organiques COT. Ces analyseurs délivrent alors, en direction du calculateur C, des signaux correspondant à des flux d'informations, via les lignes d'entrée 1001', 1001" et 1002. Ce calculateur reçoit également, de façon optionnelle, des informations supplémentaires par les lignes d'entrée 1003 et 1004. Comme vu ci-dessus, ces informations optionnelles sont par exemple relatives à la teneur en CO, ainsi qu'au débit de fumées.

A partir de ces différentes informations d'entrée, le calculateur pilote le dosage des deux produits, stockés dans les silos 101 et 102. De façon plus précise, ce calculateur délivre des signaux de sortie en direction des deux vis sans fin de 201 et 202, afin d'en commander la vitesse de rotation et, par conséquent, le débit de produit alimenté à la ligne 301.

Ce calculateur assigne aux deux vis sans fin deux fonctions respectives $f_1$ et $f_2$, définissant la quantité de produits pulvérulents à délivrer à la ligne 301. La fonction $f_1$, concernant le pilotage du produit pulvérulent 1, est croissante selon la teneur mesurée en $SO_2$ et selon la teneur mesurée en HCl. En d'autres termes, plus la teneur en HCl mesurée en amont du dispositif d'épuration est élevée, plus le débit de produit pulvérulent 1 admis en amont du filtre à manche est important. Il en va de même pour ce qui est de la teneur en HCl.

Par ailleurs, la fonction $f_2$ relative au débit de produit pulvérulent 2 est croissante selon la teneur en composés organiques COT. En d'autres termes, plus cette teneur en produits organiques COT, en amont du dispositif d'épuration, est importante, plus le débit de produit pulvérulent 2 admis en amont du filtre à manche est élevé.

Comme vu ci-dessus, l'une et/ou l'autre de ces fonctions $f_1$ et $f_2$ peut faire également intervenir les informations délivrées par les lignes 1003 et 1004. Selon l'invention, on prévoit notamment que $f_2$ fasse intervenir, non seulement la teneur en COT, mais également les teneurs respectives en HCl et en $SO_2$. En effet, une augmentation de la teneur en HCl est de nature à induire une augmentation correspondante de la teneur en dioxines, alors qu'une augmentation de la teneur en $SO_2$ est au contraire de nature à induire une diminution de la teneur en dioxines.

A titre d'exemple, les fonctions $f_1$ et $f_2$ calculées par le calculateur peuvent ainsi s'établir somme suit :

$$f_1 = K^* \, Q^* \, (2\,[SO_2] + [HCl])$$

et

$$f_2 = K_1^* \, Q^* \, (K_2[COT] + K_3[HCl] + K_4[SO_2]),$$

où

Q est égal au débit des fumées immédiatement en amont du réacteur 601, K, $K_1$, $K_2$ et $K_3$ sont des constantes positives, alors que $K_4$ est une constante négative.

Cependant, on peut prévoir aussi que les fonctions $f_1$ et $f_2$ adoptent des formes plus complexes, en faisant intervenir d'autres paramètres.

On peut ainsi prévoir que le calcul de la fonction $f_1$ fait intervenir, non seulement la teneur en $SO_2$ et en HCl comme décrit ci-dessus, mais également la teneur en COT. On peut également prévoir que $f_1$ et $f_2$ soient libellées de façon plus complexe, en particulier non linéaire.

Ainsi, $f_1$ peut être croissante en fonction des teneurs en $SO_2$ et HCl, de façon non linéaire. Il en va de même pour $f_2$, qui peut être croissante en fonction de COT, également de façon non linéaire. Dans le cas où $f_1$ et $f_2$ font intervenir d'autres teneurs, comme exposé immédiatement ci-dessus, les variations correspondantes peuvent également être de type non linéaire.

A titre de variante supplémentaire, on peut mettre en oeuvre des mesures préalables, afin notamment de lier la teneur en dioxines avec la teneur en COT, mesurée par l'analyseur. On rappellera que la mesure de la teneur en dioxines, de façon continue, n'est pas possible de façon industrielle.

Dans ces conditions, conformément à cette variante avantageuse de l'invention, on réalise une série de prélèvement des fumées, s'écoulant au niveau du piquage des analyseurs, à différents temps notés $t_1$ à $t_N$. Puis, on analyse de façon séparée chaque prélèvement, en particulier en ce qui concerne le débit de fumées, la teneur en COT, ainsi que la teneur en dioxines. Il est à noter que ces analyses ne sont pas faites en continu, à savoir qu'elles ne font pas intervenir les analyseurs décrits sur la figure 1, au moins en ce qui concerne la mesure des dioxines.

Dans ces conditions, pour i compris entre 1 et N, on dispose d'une série de teneurs en dioxines $[PCDD/F]_i$ en fonction de la teneur en composés organiques $[COT]_i$. Il est alors possible d'accéder à une courbe, illustrant la variation des dioxines en fonction des COT, laquelle est reproduite en figure 2.

Cette campagne de mesure préalable permet d'affiner le pilotage des produits pulvérulents. Ainsi, la fonction

$f_2$ liant le débit de produit 2 à la teneur en COT peut être modifiée, en fonction de la nature de la courbe de la figure 2.

Dans l'exemple illustré, on suppose que la teneur en dioxines varie tout d'abord à peu près linéairement, avec une pente relativement forte, jusqu'à une valeur seuil notée $[PCDD/F]_S$, correspondant à une teneur seuil en composés organiques $[COT]_S$. Puis, au-delà de cette dernière valeur, la teneur en dioxines continue à augmenter à peu près linéairement avec celle des composés organiques, avec cependant une pente bien plus faible.

Dans ces conditions, il est possible de tenir compte de l'allure de cette courbe, lors du calcul de la fonction $f_2$. En l'occurrence, si la valeur mesurée de la teneur en COT, notée $[COT]_M$, est inférieure à la valeur seuil $[COT]_S$, alors $f_2$ s'établit comme ci-dessous, à savoir :

$$f_2 = K'^* Q^* [COT]_M.$$

En revanche, si $[COT]_M$ est supérieur à $[COT]_S$, alors $f_2$ peut s'établir comme suit :

$$f_2 = Q^* (K'[COT]_S + K''([COT]_M - [COT]_S),$$

où

K' et K" présentent des valeurs différentes.

Bien évidemment, la courbe de la teneur en dioxines, en fonction de la teneur en composés organiques, peut présenter un profil différent de celui de la figure 2. Dans ces conditions, l'homme du métier est à même de procéder aux ajustements correspondants, dans le calcul de la fonction $f_2$.

L'invention permet d'atteindre les objectifs précédemment mentionnés.

L'invention prend en effet le contrepied de l'art antérieur, dans lequel l'alimentation en produits pulvérulents est pilotée en fonction d'analyses mises en oeuvre en aval du dispositif d'épuration. Ainsi, dans l'art antérieur, on porte l'attention sur les effluents de l'installation, en particulier sur la teneur en polluants au niveau de la cheminée.

Or, cette approche de l'art antérieur ne se révèle pas satisfaisante, en particulier dans le cas des phases transitoires, au cours desquelles les variations des teneurs en polluants peuvent être énormes et rapides. Dans ces conditions, le fait de réaliser des mesures uniquement en aval du dispositif d'épuration ne permet pas de réagir, de façon suffisamment rapide, à l'occurrence de ces phénomènes transitoires. Ceci expose donc à des pics de pollution, ou bien oblige à un surdosage permanent des produits pulvérulents, ce qui n'est pas économique.

Au contraire, l'invention met en oeuvre des mesures en amont du dispositif d'épuration. Dans ces conditions, le calculateur reçoit en entrée des informations relatives à la teneur en certains polluants acides, ainsi qu'en composés organiques. A partir de ces informations d'entrée, ce calculateur délivre deux signaux de sortie, destinés au pilotage des organes de dosage en produits pulvérulents. En particulier, grâce au calculateur, le signal de sortie relatif au dosage du produit pulvérulent associé aux composés organiques tient compte non seulement de la teneur en composés organiques des fumées à traiter, mais aussi de la teneur en certains polluants acides, ce qui permet d'optimiser la quantité de ce produit pulvérulent introduit dans les fumées : autrement dit, l'invention permet de doser à la fois efficacement et « au plus juste » les produits pulvérulents, tout particulièrement lors de phases transitoires des incinérateurs d'où proviennent les fumées à traiter, pour atteindre des performances d'épuration préfixées de manière économiquement satisfaisante. L'Invention trouve donc son intérêt lors de telles phases transitoires puisque c'est durant ces phases qu'on est le plus susceptible d'avoir des pics de polluants, organiques et monoxyde de carbone en particulier. Ainsi, l'approche globale de traitement proposée par l'invention s'avère particulièrement avantageuse lors de telles phases transitoires.

La fonction de calcul, assurée par le calculateur, peut donc être assimilée à un « multi-variable control » faisant intervenir au moins trois entrées, correspondant aux teneurs en HCl, $SO_2$ et COT, ainsi que deux sorties.

**Revendications**

1. Procédé d'épuration de fumées de combustion, dans lequel :

   - on fait s'écouler ces fumées (F) dans un dispositif d'épuration comprenant un réacteur (601) et un dispositif de collecte des particules (701),
   - on introduit dans ces fumées (F), en amont du dispositif de collecte, un premier produit pulvérulent (1) destiné à capter les polluants acides de ces fumées, ainsi qu'un second produit pulvérulent (2) destiné à contrôler les composés organiques, en particulier les dioxines et les furanes,
- on dose de façon indépendante les quantités respectives de premiers et de seconds produits pulvérulents,
- on mesure, en amont du dispositif d'épuration (601, 701), la concentration en au moins l'acide chlorhydrique (HCl), le dioxyde de soufre ($SO_2$) et les composés organiques (COT),
- on utilise un calculateur (C), auquel on envoie des informations relatives auxdites mesures de concentration, et
- on utilise le calculateur (C) pour piloter, à la fois, le débit du premier produit pulvérulent, admis dans les fumées, en fonction d'au moins les concentrations en acide chlorhydrique et en dioxyde de soufre, mesurées en amont du dispositif d'épuration, et le débit du second produit pulvérulent, admis dans les fumées, en fonction d'au moins lesdites concentrations mesurées en acide chlorhydrique et en dioxyde de soufre et de la concentration en composés organiques mesurée en amont du dispositif d'épuration.

2. Procédé suivant la revendication 1, **caractérisé en ce que** le calculateur (C) est utilisé pour piloter le débit du premier produit pulvérisant également en fonction de la teneur en composés organiques mesurée en amont du dispositif d'épuration.

3. Procédé suivant l'une des revendications 1 ou 2, **caractérisé en ce que** le calculateur (C) est utilisé pour piloter le débit des premier et second produits pulvérulants lors de phases transitoires du fonctionnement d'une unité de combustion d'où proviennent les fumées (F).

4. Procédé selon l'une des revendications 1 à 3, **caractérisé en ce qu'**on utilise le calculateur (C) afin de calculer une première et une seconde fonctions de dosage ($f_1$, $f_2$) et on délivre ces deux fonctions de dosage, à partir de sorties de ce calculateur, afin de piloter le débit du premier et du second produits pulvérulent.

5. Procédé selon la revendication 4, **caractérisé en ce qu'**on pilote le débit du premier produit pulvérulent selon une première fonction de dosage ($f_1$) qui est croissante en fonction de la concentration mesurée en acide chlorhydrique et croissante en fonction de la concentration mesurée en dioxyde de soufre.

6. Procédé selon l'une des revendications 4 ou 5, **caractérisé en ce qu'**on pilote le débit du second produit pulvérulent selon une seconde fonction de dosage ($f_2$) qui est croissante avec la concentration mesurée en composés organiques (COT), croissante en fonction de la concentration mesurée en acide chlorhydrique et décroissante en fonction de la concentration mesurée en dioxyde de soufre.

7. Procédé selon l'une des revendications 4 à 6, **caractérisé en ce que** la première et/ou la seconde fonctions de dosage ($f_1$, $f_2$) dépendent du débit des fumées (F).

8. Procédé selon l'une des revendications 4 à 7, **caractérisé en ce que** la première et/ou la seconde fonctions de dosage ($f_1$, $f_2$) dépendent de la teneur en monoxyde de carbone (CO).

9. Installation d'épuration de combustion, comprenant :

- un dispositif d'épuration des fumées (F) comprenant un réacteur (601) et un dispositif de collecte des particules (701) ;
- une ligne (L) d'écoulement de fumées s'étendant au travers de ce dispositif d'épuration ;
- un premier ensemble de dosage (101, 102) d'un premier produit pulvérulent (1), destiné à capter les polluants acides de ces fumées, et un second ensemble de dosage (102, 202) d'un second produit pulvérulent (2) destiné à contrôler les composés organiques, en particulier les dioxines et les furanes ;
- des moyens d'introduction (301) dans ces fumées, de ces premier et second produits pulvérulents (1, 2) ;
- des moyens de mesure (401, 402), en amont du dispositif d'épuration (601, 701), de la concentration en au moins l'acide chlorhydrique, le dioxyde de soufre et les composés organiques ; et
- un calculateur (C), dont des entrées sont mises en communication avec les moyens de mesure, de façon à recevoir des informations relatives auxdites concentrations mesurées, et dont des sorties sont mises en communication avec lesdits premier et second ensembles de dosage, afin de piloter, à la fois, le débit du premier produit pulvérulent, admis dans les fumées, en fonction d'au moins les concentrations en acide chlorhydrique et en dioxyde de soufre, mesurées en amont du dispositif d'épuration, et le débit du second produit pulvérulent, admis dans les fumées, en fonction d'au moins lesdites concentrations mesurées en acide chlorhydrique et en dioxyde de soufre et de la concentration en composés organiques mesurée en amont du dispositif d'épuration.

**Claims**

1.  Method of purifying combustion flue gases, in which:

    - these flue gases (F) are fed through a purification device comprising a reactor (601) and a particle collection device (701),
    - a first powdered product (1) intended to pick up the acid pollutants from these flue gases and a second powdered product (2) intended to control the organic compounds, in particular dioxins and furans, are introduced into these flue gases (F) upstream of the collection device,
    - the respective quantities of first and second powdered products are metered independently,
    - the concentration of at least hydrochloric acid (HCl), sulphur dioxide ($SO_2$) and the organic compounds (COT) is measured upstream of the purification device (601, 701),
    - a computer (C) is used, to which information relating to said concentration measurements is sent, and
    - the computer (C) is used to control both the flow rate of the first powdered product admitted into the flue gases as a function of at least the concentrations of hydrochloric acid and sulphur dioxide, measured upstream of the purification device, and the flow rate of the second powdered product admitted into the flue gases as a function of at least said measured concentrations of hydrochloric acid and sulphur dioxide and the concentration of organic compounds measured upstream of the purification device.

2.  Method as claimed in claim 1, **characterised in that** the computer (C) is used to control the flow rate of the first powdered product additionally as a function of the content of organic compounds measured upstream of the purification device.

3.  Method as claimed in one of claims 1 or 2, **characterised in that** the computer (C) is used to control the flow rate of the first and second powdered products during transitory phases of operation of a combustion unit from which the flue gases (F) are arriving.

4.  Method as claimed in one of claims 1 to 3, **characterised in that** the computer (C) is used to calculate a first and a second metering function ($f_1$, $f_2$) and these two metering functions are supplied from outputs of this computer as a means of controlling the flow rate of the first and second powdered products.

5.  Method as claimed in claim 4, **characterised in that** the flow rate of the first powdered product is controlled on the basis of a first metering function ($f_1$) which is incremental as a function of the measured concentration of hydrochloric acid and incremental as a function of the measured concentration of sulphur dioxide.

6.  Method as claimed in one of claims 4 or 5, **characterised in that** the flow rate of the second powdered product is controlled on the basis of a second metering function ($f_2$) which is incremental with the measured concentration of organic compounds (COT), incremental as a function of the measured concentration of hydrochloric acid and decrescent as a function of the measured concentration of sulphur dioxide.

7.  Method as claimed in one of claims 4 to 6, **characterised in that** the first and/or second metering functions ($f_1$, $f_2$) depend on the flow rate of the flue gases (F).

8.  Method as claimed in one of claims 4 to 7, **characterised in that** the first and/or second metering functions ($f_1$, $f_2$) depend on the content of carbon monoxide (CO).

9.  Facility for purifying combustion flue gases comprising:

    - a device for purifying flue gases (F) comprising a reactor (601) and a particle collection device (701);
    - a flow line (L) for flue gases extending through this purification device;
    - a first unit (101, 102) for metering a first powdered product (1) intended to pick up the acid pollutants from these flue gases and a second unit (102, 202) for metering a second powdered product (2) intended to control the organic compounds, in particular dioxins and furans;
    - means (301) for introducing these first and second powdered products (1, 2) into the flue gases;
    - means (401, 402) for measuring, upstream of the purification device (601, 701), the concentration of at least hydrochloric acid, sulphur dioxide and organic compounds; and
    - a computer (C), the inputs of which are placed in communication with the measuring means so as to receive information relating to said measured concentrations, and the outputs of which are placed in communication with the first and second metering units in order to control both the flow rate of the first powdered product admitted into the flue gases as a function of at least the concentrations of hydrochloric acid and sulphur dioxide measured upstream of the purification device and the flow rate of the second powdered product admitted into the flue gases as a function of at least said measured concentrations of hydrochloric acid and sulphur dioxide and the concentration of organic compounds measured upstream of the purification device.

**Patentansprüche**

1. Verfahren zum Reinigen von Verbrennungsrauchgasen, bei dem:

   - man diese Rauchgase (F) in eine Reinigungsvorrichtung strömen lässt, die einen Reaktor (601) und eine Vorrichtung (701) zum Sammeln von Partikeln umfasst,
   - man in diese Rauchgase (F) vor der Sammelvorrichtung einen ersten pulverförmigen Stoff (1), der dazu dient, saure Schadstoffe dieser Rauchgase aufzufangen, sowie einen zweiten pulverförmigen Stoff (2) einführt, der dazu dient, die organischen Verbindungen, insbesondere die Dioxine und die Furane zu bestimmen,
   - man in unabhängiger Weise die jeweiligen Mengen des ersten und des zweiten pulverförmigen Produkts dosiert,
   - man vor der Reinigungsvorrichtung (601, 701) die Konzentration von mindestens Salzsäure (HCl), Schwefeldioxid ($SO_2$) und organischen Verbindungen (COT) misst,
   - man einen Rechner (C) benutzt, dem man die Informationen bezüglich der Konzentrationsmessungen sendet und
   - man den Rechner (C) verwendet, um gleichzeitig den Durchsatz des ersten, in die Rauchgase eingegebenen pulverförmigen Stoffs abhängig von mindestens den Konzentrationen an Salzsäure und Schwefeldioxid, die vor der Reinigungsvorrichtung gemessen wurden, und den Durchsatz des zweiten, in die Rauchgase eingegebenen pulverförmigen Stoffs abhängig von mindestens den gemessenen Konzentrationen an Salzsäure und Schwefeldioxid und der Konzentration an organischen Verbindungen, die vor der Reinigungsvorrichtung gemessen wurden, zu steuern.

2. Verfahren nach Anspruch 1, **dadurch gekennzeichnet, dass** der Rechner (C) verwendet wird, um den Durchsatz des ersten pulverförmigen Stoffs gleichfalls abhängig von dem Gehalt an organischen Verbindungen, der vor der Reinigungsvorrichtung gemessen wird, zu steuern.

3. Verfahren nach einem der Ansprüche 1 oder 2, **dadurch gekennzeichnet, dass** der Rechner (C) verwendet wird, um den Durchsatz des ersten und zweiten pulverförmigen Stoffs bei den Übergangsphasen des Betriebs einer Verbrennungseinheit, von der die Rauchgase (F) herrühren, zu steuern.

4. Verfahren nach einem der Ansprüche 1 bis 3, **dadurch gekennzeichnet, dass** man den Rechner (C) verwendet, um eine erste und eine zweite Dosierfunktion ($f_1$, $f_2$) zu berechnen und man diese zwei Dosierfunktionen von den Ausgängen dieses Rechners liefert, um den Durchsatz des ersten und des zweiten pulverförmigen Stoffs zu steuern.

5. Verfahren nach Anspruch 4, **dadurch gekennzeichnet, dass** man den Durchsatz des ersten pulverförmigen Stoffs nach einer ersten Dosierfunktion ($f_1$) steuert, die abhängig von der gemessenen Konzentration an Salzsäure und abhängig von der gemessenen Konzentration an Schwefeldioxid ansteigt.

6. Verfahren nach einem der Ansprüche 4 oder 5, **dadurch gekennzeichnet, dass** man den Durchsatz des zweiten pulverförmigen Produkts nach einer zweiten Dosierfunktion ($f_2$) steuert, die mit der gemessenen Konzentration an organischen Verbindungen (COT) ansteigt, abhängig von der gemessenen Konzentration an Salzsäure ansteigt und abhängig von der gemessenen Konzentration an Schwefeldioxid fällt.

7. Verfahren nach einem der Ansprüche 4 bis 6, **dadurch gekennzeichnet, dass** die erste und/oder die zweite Dosierfunktion ($f_1$, $f_2$) von dem Durchsatz der Rauchgase (F) abhängen.

8. Verfahren nach einem der Ansprüche 4 bis 7, **dadurch gekennzeichnet, dass** die erste und/oder die zweite Dosierfunktion ($f_1$,$f_2$) vom Gehalt an Kohlenmonoxid (CO) abhängen.

9. Einrichtung zur Reinigung von Verbrennungsrauchgasen, umfassend:

- eine Vorrichtung zur Reinigung von Rauchgasen (F), die einen Reaktor (601) und eine Vorrichtung zum Sammeln von Partikeln (701) aufweist;

- eine Leitung (L) für den Durchfluss der Rauchgase, die sich durch diese Reinigungsvorrichtung erstreckt;

- eine erste Anordnung (101, 102) zur Dosierung eines ersten pulverförmigen Stoffs (1), der dazu dient, die sauren Schadstoffe dieser Rauchgase aufzufangen, und eine zweite Anordnung (102, 202) zur Dosierung eines zweiten pulverförmigen Stoffs (2), der dazu dient, die organischen Verbindungen, insbesondere die Dioxine und Furane, zu überwachen;

- Mittel (301) zum Einführen dieses ersten und zweiten pulverförmigen Stoffs (1, 2) in diese Rauchgase;

- Mittel (401, 402) zur Messung der Konzentration mindestens an Salzsäure, Schwefeldioxid und organischen Verbindungen vor der Reinigungsvorrichtung (601, 701); und

- einen Rechner (C), dessen Eingänge mit den Messmitteln verbunden sind, um die Informationen bezüglich der gemessenen Konzentrationen zu empfangen, und dessen Ausgänge mit der ersten und zweiten Dosieranordnung verbunden sind, um gleichzeitig den Durchsatz des ersten, in die Rauchgase eingegebenen pulverförmigen Stoffs abhängig von mindestens den Konzentrationen an Salzsäure und an Schwefeldioxid, die vor der Reinigungsvorrichtung gemessen werden, und den Durchsatz des zweiten, in die Rauchgase eingeführten pulverförmigen Stoffs, abhängig von mindestens den gemessenen Konzentrationen an Salzsäure und an Schwefeldioxid und von der Konzentration an organischen Verbindungen, die vor der Reinigungsvorrichtung gemessen werden, zu steuern.

Fig.1

Fig.2

EP 2 292 315 B1

10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0646404 A
- US 4889698 A
- EP 1537907 A